# EUROPEAN PATENT SPECIFICATION

(11) **EP 3 250 517 B1**
(45) Date of publication and mention of the grant of the patent: **10.06.2020**
(21) Application number: 16745497.4
(22) Date of filing: 28.01.2016
(51) Int. Cl.: C02F 1/56, C02F 1/52, C02F 1/54, C02F 103/10, C02F 103/16, C02F 103/28, C02F 103/30, C02F 103/34, C02F 103/36, C02F 103/32, C02F 1/72

(54) **COMBINATION OF FLOCCULANT WITH SURFACTANT FOR WASTEWATER TREATMENT**
KOMBINATION VON FLOCKUNGSMITTEL MIT TENSID ZUR ABWASSERBEHANDLUNG
COMBINAISON DE FLOCULANT ET DE TENSIOACTIF POUR TRAITER DES EAUX USÉES

(30) Priority: 28.01.2015 US 201562108946 P; 19.05.2015 CH 6912015
(43) Date of publication of application: 06.12.2017
(73) Proprietor: WETEQ S.A., 1852 Luxembourg (LU)
(72) Inventor: ABTEW, Ester, 96510 Jerusalem (IL); DOMB, Abraham, J., 9359006 Jerusalem (IL)
(74) Representative: Potter Clarkson
(86) International application number: PCT/IB2016/000907
(87) International publication number: WO 2016/142789

(56) References cited:
- EP-A1- 0 775 165
- WO-A1-2014/178914
- US-A- 3 756 959
- US-A- 4 071 447
- US-A- 4 758 353
- US-B1- 7 291 275

## Description

### FIELD OF THE INVENTION

The present invention relates to the field of water treatment, more specifically to the use of a combination of a polymer-based flocculant with anionic, cationic, or non-ionic surfactants for remediation of water, particularly industrial water.

### BACKGROUND OF THE INVENTION

Wastewaters represent a major problem on a global scale. Many industries generate wastewater which can create significant environmental issues and health hazards. Industrial and agricultural wastewaters cannot be drained off without treatment. Such environmental concerns have continually driven scientists and engineers to develop new materials and methods which can lower the extent of pollution of the environment (Brostow, et al., Materials Letters 61:4381-4384, 2007 and Craciun et al., J. Materials, 2013).

Flocculation plays a dominant role in wastewater treatment. Industrial wastewater, for example, can be treated with organic or inorganic flocculating agents such as, vinyl polymers and natural polysaccharides (i.e. chitosan, and chitosan grafted with synthetic polymers) and inorganic coagulants. As a result of the complex interdependence between numerous factors inherent in the coagulation and flocculation processes, a good understanding of the phenomena involved is essential. Flocculation is the process whereby particles are formed as a result of destabilization and are induced to come together, make contact and thereby form large and progressively larger agglomerates. In this case, the manifestation of destabilization is realized in practical terms: in effect, flocculation accelerates floc formation, influences the physical characteristics of floes formed (e.g., their strength, size, and density), and governs the final concentration of destabilized particles. In wastewater treatment, coagulation and flocculation phenomena are extremely important (Coagulation and Flocculation in Water and Wastewater Treatment, IWA Publishing, 2006).

Flocculating agents, or flocculants, are important components which cause flocculation, the process of bringing together small particles to form larger particles by adding small quantities of chemicals in water and Wastewater treatment (Xie, et al., J. Applied Polymer Science 111:2527-2536, 2009 and Coagulation and Flocculation in Water and Wastewater Treatment, IWA Publishing, 2006). Flocculants are classified into inorganic and organic categories. Though the inorganic flocculants (also called coagulants) with multivalent metals like aluminum and iron are widely employed, organic flocculants based on acrylamide-based polymers, like polyacrylamide and its derivatives, are generally more effective than their inorganic counterparts as they possess the advantages, such as low dose, ease in handling, no interference with pH of the suspensions, and larger floc-forming capability (Xie, et al., J. Applied Polymer Science 111 :2527-2536, 2009 and Coagulation and Flocculation in Water and Wastewater Treatment, IWA Publishing, 2006).

Flocculants are applied in potable water, industrial raw and process water, municipal sewage treatment, mineral processing and metallurgy, oil drilling and recovery, and other applications (Edzwald, Water Science and Technology 27:21-35, 1993, Fettig et al., Water Supply 9:19-26, 1991, McCormick, et al., Macromolecules 23:2132-3139, 1990, McCormick et al., Macromolecules 23: 2124-2131, 1990, McCormick et al., ACS Symposium, 1991, Narkis, et al., Water Supply 9:37-44, 1991, and Selvapathy, et al., Water Supply 10:175-178, 1992). These materials have the ability to induce an advanced coagulation process, after which a large amount of bacteria and viruses from the water are precipitated together with the suspended solids.

Physical and chemical properties of flocculants based on poly(acrylamide-co-acrylic acid) obtained by electron beam irradiation are strictly related to the efficiency of Wastewater treatment expressed by the level of treated water quality indicators. There are many situations in which organic flocculants should be used together with classic coagulation aids (inorganic flocculants) such as Al₂(SO₄)₃, FeSO₄, or Ca(OH)₂ since treatments based only on organic flocculants or inorganic flocculants (classical treatment) in the treatment of highly charged wastewater are less efficient than when used in combination with other flocculants. Moreover, the so-called flocs are larger and more strongly bound than the aggregates obtained by coagulation (Brostow, et al., Materials Letters 61:4381-4384, 2007 and Craciun et al., J. Materials, 2013).

There are few reports on the use of surfactants in combination with flocculants except for the specific separation of compounds wherein the surfactant was used for pre-wetting the surface of dispersed particles in water or to induce a charge on the particle surface, thereby permitting the particles to be attracted by the flocculant and precipitated (Song, et al., Separation Science and Technology 49:424-431, 2014 and Mihai, et al., UPB Scientific Bulletin 70:29-36, 2008) Other relevant documents are US 7 291 275 B1, US 3 756 959 A, US 4 071 447 A, US 4 758 353 A, WO 2014/178914 A1 and EP 0775165 A1.

Accordingly, there is still a need for simple, efficient, and cost-effective methods and compositions for the treatment of wastewater, particularly industrial wastewater.

It is therefore an object of the invention to provide methods and formulations that are effective for treating wastewater through the combined use of a flocculant and a surfactant.

It is a further object of the invention to provide improved methods and formulations for the treatment of wastewater, including industrial wastewater.

### SUMMARY OF THE INVENTION

A method according to claim 1 is provided, which defines the essential features of the invention. Preferred embodiments are described in dependent claims 2-11. The flocculant and surfactant can be added, combined, or mixed with wastewater and solids formed can be subsequently isolated, separated, or filtered in order to obtain purified or highly purified water. In some embodiments, the aqueous flocculant formulation and the aqueous surfactant formulation are combined in a single formulation. In some embodiments, the aqueous flocculant formulation and the aqueous surfactant formulation are brought into contact with the wastewater at substantially the same time. In some embodiments, the aqueous surfactant formulation is brought into contact with the wastewater after the aqueous flocculant formulation has been brought into contact with the wastewater. In some embodiments, the same amount or more of flocculated contaminants are removed in the method as when 1.3 to 2 fold more of the flocculant is used in the absence of the surfactant.

The flocculant is a polyacrylamide-based copolymer containing acrylic acid groups. In certain embodiments, the surfactant is a non-ionic, ionic, and/or amphoteric surfactant. The flocculant and surfactant may be added as separate aqueous formulations to the wastewater to be treated. In preferred embodiments, the addition of a surfactant formulation allows for a reduction in the amount of flocculant required to effectively treat the wastewater. In preferred embodiments, the aqueous surfactant formulation is at 0.02 to 0.05% v/v after being brought into contact with the wastewater. In preferred embodiments, the aqueous surfactant formulation contains MgCl₂, typically added to about 5% w/w in the aqueous surfactant formulation. An optimal ratio of flocculant to surfactant can be determined and applied to afford the highest degree of purification while minimizing the amount of flocculant formulation required which can reduce the cost of treatment.

In a preferred embodiment, the flocculant formulation contains an anionic polyacrylamide-co-acrylic acid copolymer which is combined with a surfactant formulation containing sodium lauryl ether sulfate (SLES). In other embodiments, different surfactants may be used as described below. The aqueous formulations contain an alkaline earth metal salt and may contain additional components such as alkali metal salts, oxidants to improve the treatment efficacy. In preferred embodiments, the amount of anionic surfactant varies from 0.1-20% w/w per the dry weight of flocculant.

In some embodiments, the flocculant-surfactant formulations are combined with commercially available treatment formulations. The formulations can be applied at any point in a water treatment plant purification process. In a preferred embodiment, the method is applied at an early step in the water treatment process. In some embodiments, the flocculant and surfactant are applied as separate aqueous formulations to the wastewater to be treated. In certain embodiments the aqueous formulations are prepared with tap water, double distilled water, or seawater. The respective formulations may each contain additional chemical compounds such as basic alkali metal salts, alkaline earth metals, and/or oxidants.

The formulations can be used to treat wastewater and effluents. The method is used to treat wastewater from various sources including, but not limited to, the diamond, gold, iron, steel, food and beverage, textiles, pharmaceuticals, chemical, agriculture, oil separation, oil and petrochemicals, fracking, pulp and paper, nuclear, and electronics industries which contains one or more contaminants not considered environmentally safe for direct discharge into a drain or other potable water systems. Such contaminants include, but are not limited to, ions, organics, biochemical reagents, heavy metals, heavy metal complexes, inorganic salts, inorganic reagents, dissolved and colloidal natural organic matter, clays, silicas, and any other chemically or biologically active bodies. In certain embodiments, the wastewater or effluents to be treated according to the methods described do not comprise one or more emulsions present in the water or effluent. Treatment of the wastewater is utilized under conditions and with effective amounts of flocculants to remove the one or more contaminants or combinations thereof present in the wastewater.

### BRIEF DESCRIPTION OF THE DRAWINGS

Figure 1 is a graph of UV-vis absorbance spectra of diamond mining effluent water showing untreated effluent water (Raw water, (-◆-)) and effluent water treated with flocculant formulation only (Control, (-■-)), half flocculant formulation + sodium lauryl ether sulfate (SLES) surfactant formulation (Half, (-▲-)), and quarter flocculant formulation + SLES surfactant formulation (Quarter, (-●-)).
Figure 2 is a graph of UV-vis absorbance spectra of gold mining (low pH) effluent water (Raw water, (-◆-)), and effluent water treated with flocculant formulation only (Control, (-■-)), half flocculant formulation + SLES surfactant formulation (Half, (-▲-)), quarter flocculant formulation + SLES surfactant formulation (Quarter, (-●-)), and SLES surfactant formulation only (SLES formulation, (- 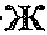 -)).
Figure 3 is a graph of UV-vis absorbance spectra of diamond mining effluent water treated with different surfactants: non-ionic: SLES (-●-), TWEEN® 80 (-◆-), SPAN® 20 (-▲-); amphoteric: cocamidopropyl hydroxysultaine (CHSB, (-x-)); and SLES surfactant formulation (SLES formulation, (-■-)).
Figure 4 is a graph of UV-vis percent transmittance (%T) spectra of gold mining (low pH) effluent water treated with different surfactants:non-ionic: SLES (-●-), TWEEN® 80 (-◆-), SPAN® 20 (-▲-); amphoteric: cocamidopropyl hydroxysultaine (CHSB, (-x-)); and SLES surfactant formulation (SLES formulation, (-■-)).
Figure 5 is a graph of UV-vis absorbance spectra of diamond mining effluent water treated with different concentrations 0, 0.01, 0.02, 0.05, and 0.2 % (v/v) of SLES surfactant formulation and polyacrylamide-co-acrylic acid flocculant formulation.
Figure 6 is a graph of UV-vis absorbance spectra of gold mining (low pH) effluent water treated with different concentrations 0, 0.01, 0.02, 0.05, and 0.2 % (v/v) of SLES surfactant formulation and polyacrylamide-co-acrylic acid flocculant formulation.

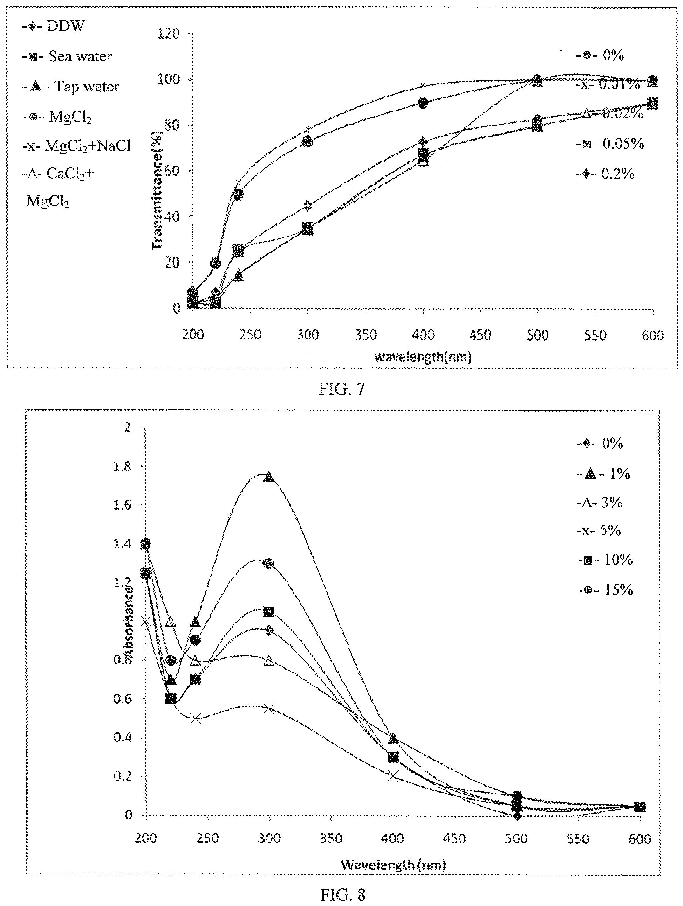

Figure 7 is a graph of UV-vis percent transmittance (%T) spectra of diamond mining effluent water treated with modified SLES surfactant formulations: SLES surfactant formulation prepared using tap water (-▲-), SLES surfactant formulation prepared using sea water (-■-) - Mediterranean, SLES surfactant formulation prepared using double distilled water - DDW (-◆-), SLES surfactant formulation prepared using tap water and containing NaCl and MgCl₂ (-x-), SLES surfactant formulation prepared using tap water and containing MgCl₂ only (-●-), and SLES surfactant formulation prepared using tap water and containing MgCl₂ and CaCl₂ (-Δ-).
Figure 8 is a graph of UV-vis absorbance spectra of diamond mining effluent water treated with modified flocculant formulation-Mg prepared with SLES surfactant formulation containing 0-15% (w/v) MgCl₂.
Figure 9 is a graph of UV-vis absorbance spectra of gold mining (low pH) effluent water treated with modified flocculant formulation-Mg prepared with SLES surfactant formulation containing 0-15% (w/v) MgCl₂.

### DETAILED DESCRIPTION OF THE INVENTION

### I. Definitions

"Bringing into contact," as used herein, refers to causing or allowing compounds, compositions, components, materials, etc. to be in contact with each other. As an example, mixing two components into the same solution constitutes bringing the components into contact. Examples of bringing into contact include adding, combining, and mixing.

"Contaminant," as used herein refers to any substance or substances that are not desired in composition, material, location, etc., such as water. For example, a substance or substances not considered environmentally safe for direct discharge into a drain or other potable water systems can be considered a contaminant. Such substances include, but are not limited to, ions, organics, biochemical reagents, heavy metals, heavy metal complexes, inorganic salts, inorganic reagents, dissolved and colloidal natural organic matter, clays, silicas, and any other chemically or biologically active bodies.

"Flocculation," as used herein, refers to the destabilization of suspended or colloidal particles present in water caused by such processes as polymer bridging and/or electrostatic interaction and charge neutralization.

"Flocculant" or "flocculating agent," as used herein, may be used interchangeably and refer to a compound capable, upon application to water containing a plurality of suspended or colloidal particles, of removing some of the particles from suspension in the water to produce purer water.
Flocculant is capable of flocculating suspended or colloidal particles. For example, a flocculant can be a polymer or copolymer capable, upon application to wastewater containing a plurality of suspended or colloidal particles, of removing some of the particles from suspension in the wastewater to produce purer water. Flocculants can be organic or inorganic. Flocculant is distinguished herein from "flocculent," which refers to the material that is flocculated by a flocculant.

"Flocculant formulation," as used herein, refers to a composition that includes a flocculant. A flocculant/surfactant formulation is a form of flocculant formulation.

"Flocculant/surfactant formulation," as used herein, refers to a single composition that includes a flocculant and a surfactant.

"Flocculated material," "flocculated contaminant," "flocculent," "floccule," and "floc," as used herein, refer to material that is flocculated by a flocculant. For example, the interacting and agglomerated particles formerly suspended or colloidal in water now bound by flocculant constitute a flocculated material. Flocculent is distinguished herein from "flocculant," which refers to a compound capable of flocculating suspended or colloidal particles.

"Polymer adsorption," as used herein, refers to the adsorption between polymer chains and a particle or particles in water due to an attractive force present. Polymer adsorption is generally considered an irreversible process.

"Electrostatic interaction," as used herein, refers to the interaction between oppositely charged ionic groups.

"Charge neutralization," as used herein, refers to the partial or complete neutralization of a particle upon addition of one or more oppositely charged groups.

"Polymer," as used herein, refers to a molecule containing more than 10 monomer units. Polymers may be synthetic or natural and water soluble. In some embodiments, the polymer may be at least partially cationic, anionic, or neutral.

"Polymer bridging," as used herein, refers to the attachment of polymer chain segments to two or more particles in wastewater which links them and induces flocculation.

"Purer water", or "purified water", as used herein, refers to water from which some or all contaminants have been removed. The purity of the water may be defined by the content of Total Organic Carbon (TOC) or by transmission of visible light of 550 nm wavelength through the water sample (percent transmittance, %T). When TOC is used to define water purity, the "purer water" or "purified water" refers to water that has at least 50% less TOC than the original water, as measured by 0.02 M potassium dichromate solution. When percent transmittance is used to define water purity, the "purer water" or "purified water" refers to water that has at least 50% greater percent transmittance than the original water. It is understood that since what constitutes a contaminant in water depends on what is subjectively considered undesirable, pure water herein can refer to water that includes solutes and other materials not considered contaminants in the context at hand.

"Separating," as used herein, refers to causing or allowing compounds, compositions, components, materials, etc. to no longer be in contact with or in the presence of each other. As an example, removing one component from a solution that also contains another component constitutes, for example, separating the components, separating the first component from the solution, separating the first component from thee second component, and separating the second component from the first component. Examples of separating include isolating and filtering.

"Surfactant," as used herein, refers to a surface active agent that may be anionic, cationic, amphoteric or non-ionic.

"Surfactant formulation," as used herein, refers to a composition that includes a surfactant. A flocculant/surfactant formulation is a form of surfactant formulation.

"At substantially the same time," as used here, refers to within one minute of each other. In the context of mixing materials or formulations into a composition or solution, at substantially the same time refers adding a second material or formulation to the composition or solution before a first added material or formulation is distributed in the composition or solution.

"Water-soluble", as used herein, generally means at least 50, 75, 100, 125, 150, 200, 225, or 250 g is soluble in 1L of water at 25°C.

"Wastewater" and "effluent water," as used herein, may be used interchangeably to refer to any solution that has water as a primary component and is a discharge or effluent that includes one or more contaminants.

### II. Formulations for Wastewater Treatment

Flocculants and surfactants are often used for wastewater treatment. However, the amount of flocculant needed to obtain a purification effect varies and is dependent on the type of wastewater and the type of flocculant and surfactant used. Generally, the methods use formulations with anionic and/or non-ionic surfactants. In preferred embodiments, the surfactants are anionic. In preferred embodiments, the formulations contain minute amounts of a surfactant that significantly improves the effectiveness of the flocculation-purification of the water.

In a preferred embodiment, the flocculant formulation contains an anionic polyacrylamide-co-acrylic acid copolymer which is combined with a surfactant formulation containing sodium lauryl ether sulfate (SLES). In other embodiments, different surfactants may be used as described below. The aqueous formulations contain alkaline earth metal salts and may contain alkali metal salts, oxidants to improve the treatment efficacy. In preferred embodiments, the amount of anionic surfactant varies from 0.1-20% w/w per the dry weight of flocculant.

### A. Surfactant Formulations

Surfactant formulations are prepared as aqueous formulations. In preferred embodiments, the surfactant is sodium lauryl ether sulfate (SLES), TWEEN® 80, SPAN® 20, cocamidopropyl hydroxysultaine (CHSB), and/or poly(diallyldimethyl ammonium chloride) (PMDC). In preferred embodiments, the surfactant formulation is prepared in tap water, double distilled water (DDW), or seawater.

Suitable anionic surfactants include, but are not limited to, those containing carboxylate, sulfonate and sulfate ions. Examples of anionic surfactants include sodium, potassium, ammonium of long chain alkyl sulfonates and alkyl aryl sulfonates such as sodium dodecylbenzene sulfonate; dialkyl sodium sulfosuccinates, such as sodium dodecylbenzene sulfonate; dialkyl sodium sulfosuccinates, such as sodium bis-(2-ethylthioxyl)-sulfosuccinate; and alkyl sulfates such as sodium lauryl ether sulfate. Cationic surfactants include, but are not limited to, quaternary ammonium compounds such as benzalkonium chloride, benzethonium chloride, cetrimonium bromide, stearyl dimethylbenzyl ammonium chloride, polyoxyethylene, and coconut amine. Examples of nonionic surfactants include ethylene glycol monostearate, propylene glycol myristate, glyceryl monostearate, glyceryl stearate, polyglyceryl-4-oleate, sorbitan acylate, sucrose acylate, PEG-150 laurate, PEG-400 monolaurate, polyoxyethylene monolaurate, polysorbates, polyoxyethylene octylphenylether, PEG-1000 cetyl ether, polyoxyethylene tridecyl ether, polypropylene glycol butyl ether, Poloxamer® 401, stearoyl monoisopropanolamide, and polyoxyethylene hydrogenated tallow amide. Suitable amphoteric surfactants include, but are not limited to, compounds such as sodium N-dodecyl-beta-alanine, sodium N-lauryl-beta-iminodipropionate, myristoamphoacetate, lauryl betaine, and lauryl sulfobetaine. Non-ionic surfactants include, but are not limited to, secondary alcohol ethoxylates, decyl glucoside, lauryl glucoside, octyl glucoside, fatty alcohol polyglycol ether, alkylphenol polyglycol ether, fatty acid polyglycol ester, polypropylene oxide-polyethylene oxide mixed polymers, N-methyl myristamide,N-sorbityl lauramide, N-methyl myristamide, N-sorbityl myristamide, and alkyl polysaccharides such as octyl, nonyldecyl, undecyldodecyl, tridecyl, tetradecyl, pentadecyl, hexadecyl, heptadecyl, and octadecyl, di-, tri-, tetra-, penta-, and hexaglucosides, galactosides, lactosides, glucoses, fructosides, fructoses and/or galactoses.

The surfactant formulations may contain additional components such as alkali metal salts (such as NaCl, NaOH), and oxidants (such as hydrogen peroxide). The surfactant formulation contains an alkaline earth metal salt (such as MgCl₂, CaCl₂). The relative amounts of the additional components which contain the surfactant formulation may vary over a wide range.

In a preferred embodiment, the surfactant formulation contains sodium lauryl ether sulfate (SLES) in seawater to which sodium chloride, sodium hydroxide, and hydrogen peroxide have been added. The weight to weight (w/w) ratio of surfactant composition (in dry form) and flocculant composition (in dry form) is in the range from about 0.01 to about 10%. The surfactant compositions are composed of lauryl sulfate polyethylene oxide (SLES) salts with monovalent cation, including: Na⁺¹ or K⁺¹, divalent cation including: Mg⁺² or Ca⁺² or trivalent ions including Al⁺³ and Fe⁺³. The ratio of dry SLES to the dry cation salts such as, NaCl, MgCl₂, CaCl₂, FeCl₃, Al sulfate, in the surfactant composition may vary from 1% to about 300%, typically from 5 to 100%.

Multiple surfactants can be used together in the same method, in the same surfactant formulation, and in separated surfactant formulations.

### B. Flocculants

Flocculants can be classified into overlapping categories such as organic, inorganic, polymeric, anionic, neutral, and cationic. Examples of inorganic flocculants include, but are not limited to, calcium oxide, iron (iii) chloride, iron (ii) sulfate, sodium silicate, polyaluminum chloride, aluminum chlorohydrate, polyaluminum chlorohydrate, aluminum sulfate, sodium aluminate, polyaluminum sulfate, polyaluminum silicate chloride, polyaluminum silicate sulfate.

Organic flocculants are generally polymeric, and depending on the types of functional groups present in the monomeric units, organic flocculants can be further characterized as anionic, neutral or cationic. Examples of organic flocculants include, but are not limited to, polyacrylamide, polyalkyleneimines (polyethylene imine), polyacrylamide-co-acrylic acid, polysaccharides, such as chitosan, galactomannans, mucilages, alginate, dextran, and glycogen. It should be noted that some of these polymers may be protonated or deprotonated, depending on the pH of the wastewater.

Flocculant formulations are prepared as aqueous formulations. In preferred embodiments, the flocculant is a water soluble or water dispersible polymer, wherein the polymer is preferably anionic.

The polymer is a copolymer of an acrylamide and an acrylic acid. In a preferred embodiment, the flocculant of the formulation is an anionic polyacrylamide-co-acrylic acid copolymer. The number or weight average molecular weight of the polymer may be varied, so long as it remains water soluble or dispersible. The polyacrylamide-co-acrylic acid copolymers may be prepared by any method known in the art. The percentage of acryl amide to acrylic or methacrylic acid in the copolymer varies from 10 to 90% and the degree of polymerization is in the range or 100 to 10000.

In preferred embodiments, the surfactant formulation is prepared in double distilled water (DDW). The flocculant formulations contain additional components such as surfactants, and alkali metal salts (such as NaCl and MgCl₂). The relative amounts of the additional components which contain the flocculant formulation may be varied over a wide range, such as from 0.01% to about 20% of SLES with salts in an amount of 10-300% of the dry SLES.

In a preferred embodiment, the flocculant formulation contains a polyacrylamide-co-acrylic acid copolymer in water at concentrations of from 0.2 to 1.0% weight per volume and additionally contains sodium lauryl ether sulfate, sodium chloride aqueous solution prepared from 90 ml of water, 30 grams of SLES and 30 grams of sodium chloride or 5-30 grams of either magnesium chloride, calcium chloride, iron chloride and aluminum sulfate. The SLES aqueous solution can be used in the amounts of about 1 to about 30% v/v of the flocculant solution.

Multiple flocculants can be used together in the same method, in the same flocculant formulation, and in separated flocculant formulations.

### C. Additives

Additional agents being alkaline earth metal salts are included in the formulation and further agents can be included in the flocculant formulations to enhance the flocculating properties of the formulations. For example, an additive can serve as a coagulant that facilitates the formation of particulate aggregates. Any of the metal salts described herein can be used additives. Examples of additives include alkali metal salts (such as NaCl, NaOH), aluminum sulfate, ferric chloride, polymerized metal salts (such as polyaluminum chloride, polyaluminum silicate sulfate) and oxidants (such as hydrogen peroxide).

### III. Methods

A combination of flocculant and surfactant when added to wastewater can effectively produce flocculation of contaminants present therein, which may be separated by any means known to yield purified or purer water. In one embodiment, the method can be used in the treatment of wastewater and effluents originating from industrial sources.

In some embodiments, the method described consists of adding combining, or mixing a flocculant and a surfactant with wastewater. The flocculant and surfactant may be applied as aqueous formulations at the same time (i.e., simultaneously) or separately (i.e., at different times) to the wastewater to be treated. The flocculant and surfactant can be added as separate formulations or separate compositions or the flocculant and surfactant can be added as a single formulation. In some embodiments of the single formulation comprising the flocculant and surfactant, the flocculant and the surfactant are separate compositions within the single formulation. In some embodiments, the flocculant and surfactants do not form a single additive molecule or polymer which comprises both the flocculant and surfactant. Without wishing to be bound by theory, the addition of a surfactant may aid in dispersing the flocculant in the wastewater. The flocculant is then more readily able to induce flocculation of contaminants present through processes such as electrostatic interaction, charge neutralization, and/or polymer bridging. Subsequently, a step of isolating, separating, or filtering the flocculated contaminants from the treated water is performed to yield a purified or highly purified water. In some embodiments of the methods described herein, the method does not include bubbling or any step which results in formation of bubbles for the purposes of treating wastewater.

The flocculant formulation applied to treat the wastewater is in the form of an aqueous solution containing an anionic polymer, such as a polyacrylamide-co-acrylic acid copolymer. The flocculant formulations may contain additional components such as surfactants, alkali metal salts, and oxidants.

In certain embodiments, the aqueous surfactant formulation applied during wastewater treatment is an aqueous formulation containing an ionic, amphoteric, or neutral surfactant. In preferred embodiments, the surfactant is selected from the group consisting of sodium lauryl ether sulfate (SLES), TWEEN® 80, SPAN® 20, cocamidopropyl hydroxysultaine (CHSB), and poly(diallyldimethyl ammonium chloride) (PMDC). The surfactant formulations may contain additional components such as NaCl, MgCl₂, CaCl₂, iron chloride and aluminum sulfate.

In one embodiment of the method, the addition of a formulation containing a surfactant allows for a reduction in the amount of a formulation containing a flocculant required. In some embodiments the use of a surfactant formulation in combination with a flocculant formulation allows for a reduction of the flocculant formulation by at least about 50% (by volume) in comparison to a treatment without addition of the surfactant formulation. In certain embodiments, the addition of a surfactant formulation allows for the amount of flocculant formulation to be reduced by at least about 55%, 65%, up to about 75% (by volume).

In some embodiments, the wastewater or effluents to be treated according to the methods described do not comprise one or more emulsions present in the water or effluent. In some embodiments, the wastewater or effluents to be treated according to the methods described do not comprise more than 50%, 45%, 40%, 35%, 30%, 25%, 20%, 15%, 10%, 5%, 4%, 3%, 2%, or 1% emulsions by volume in the water or effluent.

In some embodiments, the method of wastewater treatment may be combined with other commercially available treatment processes or chemical formulations. These include various types of filtration, disinfection, and chemical treatments known in the art.

In certain embodiments, the method can be applied to an existing water treatment processing facility. The method can be applied at any point in the water treatment plant purification process. In a preferred embodiment, the method is applied at an early step in the water treatment process.

### Method Parameters

The method described can be optimized to remove all or the majority of contaminants present in wastewater. Those skilled in the art will recognize that the source and composition of the wastewater or effluent water sample will affect the treatment conditions required, such as the relative formulation volumes to be applied and the treatment times required in treatment of the wastewater or effluent water. It is well known that each type of wastewater, depending on its origin, will have its own particularities and that within the same class or type of wastewater significant variations may be encountered.

The pH of the wastewater may affect the activity of flocculants and surfactants. In certain embodiments of the method, the pH of the wastewater may be adjusted, as appropriate, in order to improve the efficiency of the treatment process. If the wastewater or effluent water to be treated is highly acidic (pH < 3) or highly basic (pH > 10), the pH of the water may be preferably adjusted to a pH in the range of about 4-9 prior to discharge of the treated water. In some embodiments the pH of the water is adjusted to a pH of about 5-8, 6-7, or to a pH of about 7 (i.e. neutral pH) prior to discharge.

In certain embodiments, the amount (by weight) of flocculant and/or surfactant formulation, added separately or in combination, to a given type or volume of wastewater to be treated is in the range of between about 0.1 mg and 1000 mg per kilogram of wastewater. Additionally, the ratio of flocculant to surfactant used in the treatment may be optimized to maximize the efficacy of the treatment and minimize the amount of flocculant used.

In some embodiments, the step of bringing a flocculant and a surfactant into contact with wastewater includes adding, combining, or mixing the flocculant and surfactant with the wastewater and applying some form of agitation or mixing, which may include, but is not limited to, mechanical stirring or acoustic (i.e. sonication-based) forms of mixing, to ensure sufficient adequate contact of the contaminants present in the wastewater with the flocculant and surfactant formulation. In certain embodiments, agitation or mixing is performed for a few seconds up to about 20 minutes. Typically, the treatment is conducted at room temperature.

In certain embodiments, the combination or mixture of flocculant, surfactant, and wastewater is allowed to stand for a sufficient amount of time to allow for flocculation and sedimentation of contaminants from the wastewater to occur. In certain embodiments, sedimentation time is in the range of about 30 seconds up to about 5 hours, as determined by visual observation of sedimentation followed by UV transmission measurement.

In preferred embodiments, the disclosed treatment method is applied to wastewater that is at or near room temperature. In some embodiments, the temperature of the wastewater at which the method is applied may nonetheless be varied improve the treatment efficiency. In some non-preferred embodiments, the method of treatment is applied at elevated temperatures in the range of above 25 °C up to about 70 °C. In other non-preferred embodiments, the method of treatment is applied at low temperatures in the range of below 25 °C down to about 5 °C.

### Examples

The present invention will be further understood by reference to the following non-limiting examples.

### Example 1: Water Treatment Using a Combination of Surfactant and Flocculant Formulations

### I. Materials and Methods

### A. Methods of Analyzing Treated Water Samples

### UV-Vis Absorbance and Percent Transmittance:

Water samples were scanned with a UV-vis spectrophotometer (*Ultrospec 2100 pro*)*.* The scanning was for transmittance (% of light transmitted through the sample) and for absorbance. Then the percent of the transmitted light amount was determined at the specific wavelength of 550 nm.

The amount of ionic metals in the water samples was analyzed by ICP-MS (Agilent 7500cx ICP-MS).

### Total Organic Carbon (TOC):

Analysis was performed using potassium dichromate (standard commercial solution 0.02 M): Potassium dichromate (in excess) was reacted with the treated or untreated water samples in a strong acidic solution (H₂SO₄). The excess of potassium dichromate was titrated with ferric ammonium sulfate.

### Total Dissolved Solids (TDS):

Total dissolved solids were determined by taking a known volume of a water sample and centrifuging the water (10 minutes at 4000 rpm), decanting the supernatant into a vial and freeze drying to remove the water. The weight of the solids remaining after freeze drying represents the total dissolved solids (TDS).

### Total Solids (TS):

The amount of suspended solids was determined by taking a known volume of a water sample, centrifuging the water (10 minutes at 4000 rpm), and decanting the supernatant. The remaining solids (precipitate) isolated by centrifugation were dried and weighed and represent the total amount of suspended solids (SS) in the water sample.

The total weight of solids in a water sample was determined by taking the sum of the total dissolved solids (TDS; see above) and the suspended solids (SS) and denoted as total solids (TS) given as a weight per volume (mg/L).

### Conductivity:

Conductivity of water samples was measured with a Malvern Zetasizer Nano ZS,a system for measuring zeta potential and electrophoretic mobility (conductivity). The measurement of zeta potential and conductivity was performed simultaneously. The conductivity was given in units of milliSiemens per cm (mS/cm).

### B. Industrial Wastewater Treated

Sample 1- Originated from diamond mining industry (Petra mining) South Africa.
Sample 2- With low pH from gold mining industry South Africa.

**Table 1- Heavy metal ion and other analysis done for the raw water samples: sample 1 (diamond mining) and sample 2 (gold mining)**

| **Analyses in mg/L** (unless specified otherwise) | **Sample 1 (diamond mining)** | **Sample 2 - with low pH (gold mining)** |
|---|---|---|
| **pH** - **Value at 25°C** | 9 | 2.7 |
| **Electrical Conductivity in mS/m at 25°C** | 760 | 460 |
| **Total Solid** | 16550 | 1700 |
| **Chloride Cl** | 146.67 | 50 |
| **Total Organic Carbon** | 660 | 0 |
| **Sodium as Na** | 541.2 | 108.9 |
| **Potassium as K** | 172.05 | 14.37 |
| **Calcium as Ca** | 200 | 525.3 |
| **Magnesium as Mg** | 1394.4 | 169.38 |
| **Aluminium as Al (Dissolved)** | 72.12 | 5.47 |
| **Arsenic as As (Dissolved)** | 0.051 | 0.06 |
| **Boron as B (Dissolved)** | 14.34 | 14 |
| **Copper as Cu (Dissolved)** | 0.711 | 0.242 |
| **Iron as Fe (Dissolved)** | 641.7 | - |
| **Zinc as Zn (Dissolved)** | 2.839 | 2.26 |

**Table 2. Elemental analysis of the effluent wastewater samples**

| **Sample** | **C(%)** | **H(%)** | **N(%)** | **S(%)** | **Cl(%)** |
|---|---|---|---|---|---|
| Sample 1 (diamond) | 0.5 | 0.76 | 0 | 0 | 0.97 |
| Sample 2 (gold mining) | 2.65 | 1.44 | 0.37 | 1.66 | 0.42 |

### C. Standard Formulations Used in Experiments

Sodium Lauryl Ether Sulfate (SLES) Surfactant Formulation:
Unless identified as "modified," reference to an SLES surfactant formulation refers to a surfactant formulation prepared in sea water (90 mL) by the addition of sodium lauryl ether sulfate (30 g) and sodium chloride (30 g). Optionally, 0.1% (v/v) hydrogen peroxide, and 0.1% (w/v) sodium hydroxide are added.

Polyacrylamide-co-Acrylic Acid Flocculation Formulation:
Unless identified as "modified," reference to a polyacrylamide-co-acrylic acid flocculation formulation refers to a flocculant formulation prepared in double-distilled water having 0.015% (v/v) of the above SLES surfactant formulation, and 0.33% (w/v) of polyacrylamide-co-acrylic acid copolymer.

Aqua Split:
Refers to a formulation prepared in sea water (60 mL) by the addition of sodium lauryl ether sulfate (5 g), sodium chloride (5 g), aluminum sulfate hexadecahydrate (30 g), 0.1% (v/v) hydrogen peroxide, and 0.1% (w/v) of sodium hydroxide.

Aqua Shock:
Refers to a formulation prepared from calcium hydroxide (80 g), aluminum sulfate hexadecahydrate (4 g), sodium hydroxide (10 g), and the above SLES surfactant formulation (4 g).

### II. Sodium Lauryl Ether Sulfate (SLES) Surfactant Formulation Mixed with Polyacrylamide-co-Acrylic Acid Flocculation Formulation for Wastewater Treatment of Diamond Mining Effluent Water

Wastewater Treatment Procedure:
1. 100 mL of the effluent water was transferred to a 300 mL beaker.
2. The effluent water was set to stir with a magnetic stirrer.
3. 50 µL of Aqua Split was added to the effluent water using a pipette.
4. The mixture was stirred for 3 minutes.
5. Polyacrylamide-co-acrylic acid flocculation formulation was added to the mixture.
6. Subsequently, an additional 25 µL of Aqua Split was added to the mixture
7. The mixture was stirred for 10 minutes.
8. Stirring was ceased to allow the solids to settle to the bottom of the beaker.
9. The water was filtered through GF/A Glass Microfiber Filters. Whatman- 1.6 µm with Buchner vacuum flask arrangement and the filtrate was collected.
10. The sludge collected was washed with double distilled water and the washing water was discarded.
11. The sludge was dried in an oven at 120°C.
12. The sludge was weighed before and after drying.

The diamond mining effluent water sample was treated under four conditions. A control treatment was performed without the addition of the SLES surfactant formulation. In a second treatment, the amount of polyacrylamide-co-acrylic acid flocculant formulation was half (by volume) of the control volume and 100 µL of the SLES surfactant formulation was added. In a third treatment, the amount of polyacrylamide-co-acrylic acid flocculant formulation was a quarter (by volume) of the control volume and 100 µL of the SLES surfactant formulation was added. A third treatment was performed where only the SLES surfactant formulation was used without any additional treatment agents.

**Table 3. Materials and Amounts Used in Wastewater Treatment of Effluent Water from Diamond Mining**

| **Name of Treatment** | **Materials and Amounts Used in the Treatment Procedure** | | | |
|---|---|---|---|---|
| | **Water Sample (mL)** | **Aqua Split (µL)** | **Flocculant Formulation (mL)** | **SLES Surfactant Formulation (µL)** |
| Control | 100 | 75 | 3 | 0 |
| Half Flocculant+SLES | 100 | 75 | 1.5 | 100 |
| Quarter Flocculant+SLES | 100 | 75 | 0.75 | 100 |
| SLES Surfactant Formulation only | 100 | 0 | 0 | 100 |

### III. Sodium Lauryl Ether Sulfate (SLES) Surfactant Formulation Mixed with Polyacrylamide-co-Acrylic Acid Flocculation Formulation for Wastewater Treatment of Gold Mining (Low pH) Effluent Water

Wastewater Treatment Procedure:
1. 100 mL of the effluent water was transferred to a 300 mL beaker.
2. The effluent water was set to stir with a magnetic stirrer.
3. 100 mg of Aqua Shock was added to the effluent water.
4. The mixture was stirred for 3 minutes.
5. Polyacrylamide-co-acrylic acid flocculation formulation was added to the mixture.
6. The mixture was stirred for 10 minutes.
7. Stirring was ceased to allow the solids to settle to the bottom of the beaker.
8. The water was filtered through GF/A Glass Microfiber Filters. Whatman- 1.6 µm with Buchner vacuum flask arrangement and the filtrate was collected.
9. The sludge collected was washed with double distilled water and the washing water was discarded.
10. The sludge was dried in an oven at 120°C.
11. The sludge was weighed before and after drying.

**Table 4. Materials and Amounts Used in Wastewater Treatment of Effluent Water from Gold Mining (Low pH)**

| **Name of Treatment** | **Materials and Amounts Used in the Treatment Procedure** | | | |
|---|---|---|---|---|
| | **Water Sample (mL)** | **Aqua Shock (mg)** | **Flocculant Formulati on (µL)** | **SLES Surfactant Formulation (µL)** |
| Control | 100 | 100 | 450 | 0 |
| Half Flocculant+SLES | 100 | 100 | 225 | 100 |
| Quarter Flocculant+SLES | 100 | 100 | 112.5 | 100 |
| SLES Surfactant Formulation only | 100 | 0 | 0 | 100 |

The gold mining (low pH) effluent water sample was treated under four conditions. A control treatment was performed without the addition of the SLES surfactant formulation. In a second treatment, the amount of polyacrylamide-co-acrylic acid flocculant formulation was half (by volume) of the control volume and 100 µL of the SLES surfactant formulation was added. In a third treatment, the amount of polyacrylamide-co-acrylic acid flocculant formulation was a quarter (by volume) of the control volume and 100 µL of the SLES surfactant formulation was added. A third treatment was performed where only the SLES surfactant formulation was used without any additional treatment agents.

### IV. Sodium Lauryl Ether Sulfate (SLES) Surfactant Formulation Mixed with Polyacrylamide-co-Acrylic Acid Flocculation Formulation for Wastewater Treatment of Iron Mining Effluent Water

Wastewater Treatment Procedure:
1. 100 mL of the effluent water was transferred to a 300 mL beaker.
2. The effluent water was set to stir with a magnetic stirrer.
3. 100 mg of Aqua Shock was added to the effluent water.
4. The mixture was stirred for 3 minutes.
5. Polyacrylamide-co-acrylic acid flocculation formulation was added to the mixture.
6. The mixture was stirred for 10 minutes.
7. Stirring was ceased to allow the solids to settle to the bottom of the beaker.
8. The water was filtered (through GF/A Glass Microfiber Filters. Whatman- 1.6 µm) with Buchner vacuum flask arrangement and the filtrate was collected.
9. The sludge collected was washed with double distilled water and the washing water was discarded.
10. The sludge was dried in an oven at 120°C.
11. The sludge was weighed before and after drying.

The iron mining effluent water sample was treated under four conditions. A control treatment was performed without the addition of the SLES surfactant formulation. In a second treatment, the amount of polyacrylamide-co-acrylic acid flocculant formulation was half (by volume) of the control volume and 100 µL of the SLES surfactant formulation was added. In a third treatment, the amount of polyacrylamide-co-acrylic acid flocculant formulation was a quarter (by volume) of the control volume and 100 µL of the SLES surfactant formulation was added. A third treatment was performed where only the SLES surfactant formulation was used without any additional treatment agents.

**Table 5. Materials and Amounts Used in Wastewater Treatment of Effluent Water from Iron Mining**

| Name of Treatment | Materials and Amounts Used in the Treatment Procedure | | | |
|---|---|---|---|---|
| | Water Sample (mL) | Aqua Split + HCl (32%) (1:1) (µL) | Flocculant Formulation (µL) | SLES Surfactant Formulation (µL) |
| Control | 100 | 100 | 450 | 0 |
| Half Flocculant+SLES | 100 | 1 00 | 225 | 100 |
| Quarter Flocculant+SLES | 100 | 100 | 112.5 | 100 |
| SLES Surfactant Formulation only | 100 | 0 | 0 | 100 |

### V. Results and Discussion

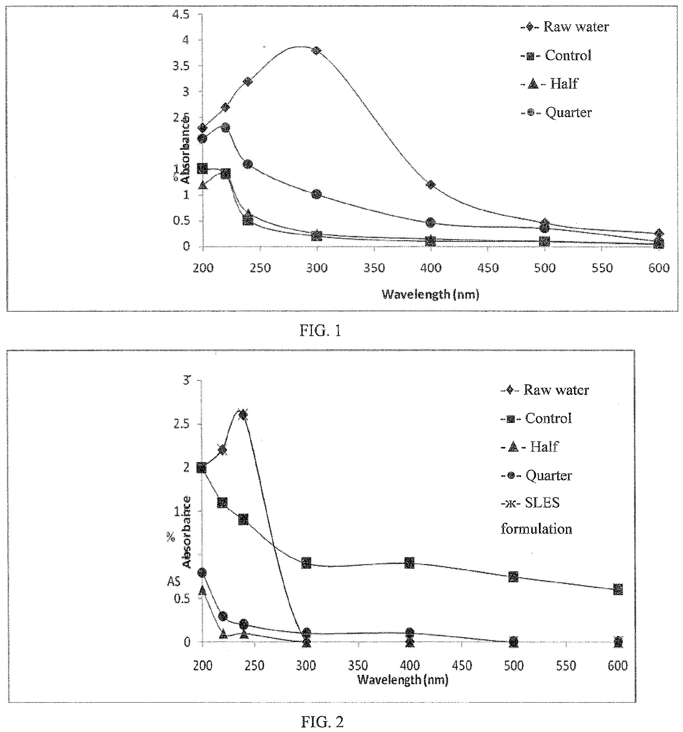

All four treatments (control, half flocculant+SLES, quarter flocculant+SLES, and SLES only) applied to each effluent water sample originating from different industrial sources in this Example were analyzed by UV-Vis absorbance spectroscopy. The data for UV-vis absorption spectra and percent Transmittance (%T) spectra are shown in Figures 1 and 2.

The UV-vis absorbance data (Figure 1) and UV-vis percent Transmittance data from the treatment of diamond mining effluent water showed that the control treatment and the treatment that used half the amount of flocculant formulation combined with the addition of SLES surfactant formulation (100 µL) both produced essentially equivalent results with significant reductions in the absorption of the treated water. Further reduction in the amount of flocculant formulation (quarter flocculant+SLES) added and keeping the amount of SLES surfactant formulation the same (100 µL) was less effective. Treatment of the water sample with SLES surfactant formulation alone did not separate solids and the water sample remained turbid.

The UV-vis absorbance data (Figure 2) from the treatment of gold mining (low pH) effluent water revealed that samples treated with half and quarter the amount of flocculant formulation combined with SLES surfactant formulation (100 µL) both achieved the most reduction in the absorption of the treated water and were more effective than the control treatment. Treatment of the water sample with SLES surfactant formulation alone had an absorbance equal to the untreated (raw) water sample indicating no purification effect.

Based on the results from the treatments applied in this Example, it was shown that treatments with a combination of polyacrylamide-co-acrylic acid flocculant formulation and an SLES surfactant formulation can be as effective or more effective as compared with the control process (no SLES surfactant formulation added). Water samples treated with SLES surfactant formulation only did not show any purification effect (Figure 2).

### Example 2: Examination of Various Surfactant Formulations in Combination with Polyacrylamide-co-Acrylic Acid Flocculation Formulation for Wastewater Treatment

### I. Polyacrylamide-co-Acrylic Acid Flocculation Formulation in Combination with Various Surfactant Formulations for Wastewater Treatment of Diamond Mining Effluent Water

Wastewater Treatment Procedure:
1. Surfactant (i.e. SLES, SPAN® 20, TWEEN® 80, or cocamidopropylhydroxysultaine (CHSB), was diluted in double distilled water to form a 33% (w/v) solution.
2. 100 mL of the effluent water was transferred to a 300 mL beaker.
3. The effluent water was set to stir with a magnetic stirrer.
4. 50 µL of Aqua Split was added to the effluent water.
5. The mixture was stirred for 3 minutes.
6. 1.5 mL of polyacrylamide-co-acrylic acid flocculation formulation was added to the mixture.
7. 100 µL of the surfactant formulation was added to the mixture.
8. 25 µL of Aqua Split was added to the effluent water.
9. The mixture was stirred for 10 minutes.
10. Stirring was ceased to allow the solids to settle to the bottom of the beaker.
11. The water was filtered (through GF/A Glass Microfiber Filters. Whatman- 1.6 µm) with Buchner vacuum flask arrangement and the filtrate was collected.
12. The sludge collected was washed with double distilled water and the washing water was discarded.
13. The sludge was dried in an oven at 60°C.
14. The sludge was weighed before and after drying.

**Table 6. Materials and Amounts Used in Wastewater Treatment of Effluent Water from Diamond Mining**

| **Name of Treatment** | **Materials and Amounts Used in the Treatment Procedure** | | | |
|---|---|---|---|---|
| | **Water Sample (mL)** | **Aqua Split (µL)** | **Flocculant Formulation (mL)** | **Surfactant (µL)** |
| Half Control+Surfactant | 100 | 75 | 1.5 | 100 |

Half of the amount of polyacrylamide-co-acrylic acid flocculation formulation used in a control treatment procedure was used for these tests. The water treatment was performed with the following surfactants: non-ionic: SLES, TWEEN® 80, SPAN® 20; and amphoteric: cocamidopropyl hydroxysultaine (CHSB). In addition, the conventional SLES surfactant formulation described earlier was also tested.

**Table 7. Transmittance of Diamond Mining Water Samples Treated with Polyacrylamide-co-Acrylic Acid Flocculation Formulation and Different Surfactants**

| **Surfactant** | **% Transmittance (at 550 nm)** |
|---|---|
| TWEEN® 80 | 96.6 |
| SPAN® 20 | 79.9 |
| SLES* | 94.1 |
| CHSB | 94.1 |
| SLES Formulation | 83.3 |

| | |
|---|---|
| * denotes 0.33% SLES in double-distilled water | |

**Table 8. Analysis of Total Organic Carbon (TOC) of Diamond Mining Water Samples Treated with Polyacrylamide-co-Acrylic Acid Flocculation Formulation and Different Surfactants**

| **Sample** | **Total Organic Carbon (mg/L)** |
|---|---|
| Centrifuged Raw Water | 660 |
| SLES formulation | 70 |
| SLES* | 36 |
| TWEEN® 80 | 25 |
| SPAN® 20 | 30 |
| CHSB | 56 |
| No surfactant formulation used | 48 |

| | |
|---|---|
| * denotes 0.33% SLES in double-distilled water | |

**Table 9. Amount of Sludge Collected from Diamond Mining Water Samples Treated with Polyacrylamide-co-Acrylic Acid Flocculation Formulation and Different Surfactants**

| **Surfactant Agent Used** | **Sludge (mg/L)** |
|---|---|
| SLES Formulation | 18828 |
| SLES* | 20853 |
| CHSB | 22466 |
| SPAN® 20 | 20344 |
| TWEEN® 80 | 18682 |
| No surfactant formulation used | 16050 |

| | |
|---|---|
| * denotes 0.33% SLES in double-distilled water | |

### II. Polyacrylamide-co-Acrylic Acid Flocculation Formulation in Combination with Various Surfactant Formulations for Wastewater Treatment of Gold Mining (Low pH) Effluent Water

Wastewater Treatment Procedure:
1. Surfactants (i.e. SLES, SPAN® 20, TWEEN® 80, or cocamidopropylhydroxysultaine (CHSB), were diluted in double distilled water to form a 33% (w/v) solution.
2. 100 mL of the effluent water was transferred to a 300 mL beaker.
3. The effluent water was set to stir with a magnetic stirrer.
4. 100 mg of Aqua Shock was added to the effluent water.
5. The mixture was stirred for 3 minutes.
6. 225 µL of polyacrylamide-co-acrylic acid flocculation formulation was added to the mixture.
7. 100 µL of surfactant was added to the mixture.
8. The mixture was stirred for 10 minutes.
9. Stirring was ceased to allow the solids to settle to the bottom of the beaker.
10. The water was filtered (through GF/A Glass Microfiber Filters. Whatman- 1.6 µm) with Buchner vacuum flask arrangement and the filtrate was collected.
11. The sludge collected was washed with double distilled water and the washing water was discarded.
12. The sludge was dried in an oven at 60°C.
13. The sludge was weighed before and after drying.

**Table 10. Materials and Amounts Used in Wastewater Treatment of Effluent Water from Gold Mining (Low pH).**

| **Name of Treatment** | **Materials and Amounts Used in the Treatment Procedure** | | | |
|---|---|---|---|---|
| | **Water Sample (mL)** | **Aqua Shock (mg)** | **Flocculant Formulation (µL)** | **SLES Surfactant Formulation (µL)** |
| Half Control+Surfactant Formulation | 100 | 100 | 225 | 100 |

Half of the amount of polyacrylamide-co-acrylic acid flocculation formulation used in a control treatment procedure was used for these tests. The water treatment was performed with the following surfactants: non-ionic - SLES, TWEEN® 80, SPAN® 20; and amphoteric - cocamidopropyl hydroxysultaine (CHSB). In addition, the conventional SLES surfactant formulation described earlier was also tested.

**Table 11. Transmittance of Gold Mining (Low pH) Water Samples Treated with Polyacrylamide-co-Acrylic Acid Flocculation Formulation and Different Surfactants.**

| **Surfactant** | **% Transmittance (at 550 nm)** |
|---|---|
| TWEEN® 80 | 84.5 |
| SPAN® 20 | 87.8 |
| SLES only | 90.3 |
| CHSB | 50 |
| SLES Formulation | 50 |

**Table 12. Total Dissolved Solids in Gold Mining (Low pH) Water Samples Treated with Polyacrylamide-co-Acrylic Acid Flocculation Formulation and Different Surfactants**

| **Surfactant** | **Total Dissolved Solid (mg/L)** | **Total Solids (mg/L)** |
|---|---|---|
| SLES Formulation | 4600 | 4640 |
| SLES only | 3800 | 5913 |
| CHSB | 4700 | 5500 |
| SPAN® 20 | 3800 | 4240 |
| TWEEN® 80 | 4400 | 4620 |

**Table 13. Amount of Sludge Collected from Gold Mining (Low pH) Water Samples Treated with Polyacrylamide-co-Acrylic Acid Flocculation Formulation and Different Surfactants**

| **Surfactant** | **Sludge (mg/L)** |
|---|---|
| SLES Formulation | 670 |
| SLES only | 350 |
| CHSB | 360 |
| SPAN® 20 | 600 |
| TWEEN® 80 | 359 |

### III. Results and Discussion

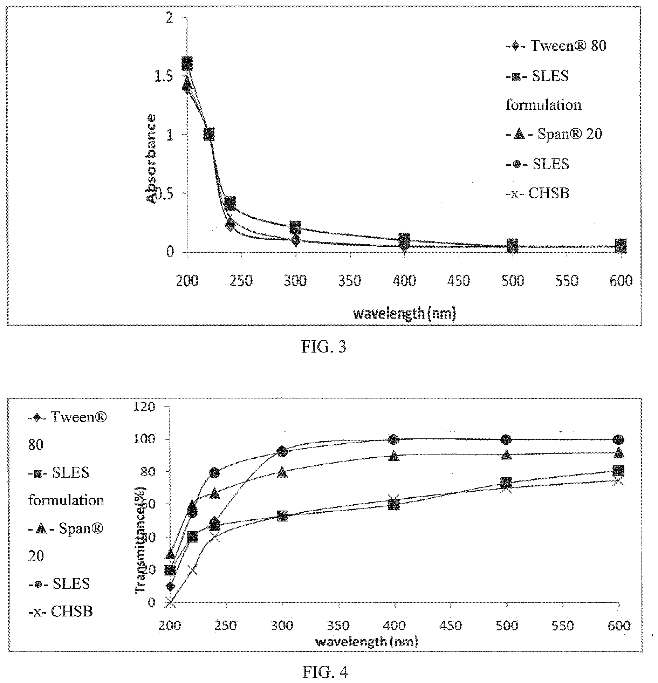

Different surfactants were examined in combination with the polyacrylamide-co-acrylic acid flocculation formulation to treat different effluent water samples in this Example. Treated water samples were analyzed by UV-Vis to determine percent transmittance (%T) (Figures 3 and 4) and absorbance, analyzed for total organic carbon (TOC), total solids/ total dissolved solids, and the total amount of sludge per volume was determined.

Percent transmittance (%T) for the diamond mining effluent water samples treated with different surfactants is shown in Table 7 above. The %T (at λ=550 nm) data revealed that the different surfactants had similar effects. The highest %T value was obtained with SLES only (anionic), CHSB cocamidopropyl hydroxysultaine (amphoteric surfactant) and TWEEN® 80, while the SPAN® 20 surfactant and SLES surfactant formulation produced the lowest %T, indicating less effective purification of the treated water.

The amount of total organic carbon (TOC) for the diamond mining effluent water samples treated is shown in Table 8 above. The contribution of the different surfactants towards the removal of organic carbon in the treated samples indicated that all surfactants affected the amount of TOC.

The total amount of sludge per volume collected from the diamond mining effluent water samples treated with different surfactants is shown in Table 9 above. The samples treated with the different surfactants produced notably higher amounts of dried sludge than the sample treated without any added surfactant.

Percent transmittance (%T) for the gold mining (low pH) effluent water samples treated with different surfactants is shown in Table 11 above. The %T (at λ=550 nm) data revealed that the highest %T value of 90.3% was obtained with the sodium lauryl ether sulfate (SLES) surfactant. Treatment with cocamidopropyl hydroxysultaine (CHSB) or the conventional SLES surfactant formulation produced the lowest %T indicative of less effective purification of the treated water. UV-vis absorbance data was consistent with the transmittance data.

Table 12 above reveals the total solids per volume for gold mining (low pH) effluent water samples treated with the different surfactants. Total solids represent the sum of dissolved and suspended solids in the sample. The lower the total solid value the more effective the addition of the particular surfactant agent used.

The total amount of sludge per volume collected from the gold mining (low pH) effluent water samples treated with different surfactants is shown in Table 13 above. The greater the amount of the sludge collected the more effective the use of the particular surfactant.

### Example 3: Effect of SLES Surfactant Formulation Dosage on the Degree of Effluent Water Purification

### I. SLES Surfactant Formulation at Different Concentrations in Combination with Polyacrylamide-co-Acrylic Acid Flocculation Formulation for Wastewater Treatment of Diamond Mining Effluent Water

Wastewater Treatment Procedure:
1. 50 mL of the effluent water was transferred to a 300 mL beaker.
2. The effluent water was set to stir with a magnetic stirrer.
3. 750 µL of polyacrylamide-co-acrylic acid flocculation formulation was added to the mixture.
4. SLES surfactant formulation was added to the mixture.
5. Stirring was ceased to allow the solids to settle to the bottom of the beaker.
6. The water was filtered (through GF/A Glass Microfiber Filters. Whatman- 1.6 µm) with Buchner vacuum flask arrangement and the filtrate was collected.
7. The sludge collected was washed with double distilled water and the washing water was discarded.
8. The sludge was dried in an oven at 60°C.
9. The sludge was weighed after drying.

**Table 14. Materials and Amounts Used in Wastewater Treatment of Effluent Water from Diamond Mining**

| **Water Sample (mL)** | **Flocculant Formulation (µL)** | **SLES Surfactant Formulation (µL)** | **Percent SLES Surfactant Formulation (v/v) (%)** |
|---|---|---|---|
| 50 | 750 | 0 | 0 |
| 50 | 750 | 5 | 0.01 |
| 50 | 750 | 10 | 0.02 |
| 50 | 750 | 25 | 0.05 |
| 50 | 750 | 100 | 0.2 |

Different concentrations (in the range of 0-0.2 % (v/v)) of SLES surfactant formulation were combined with the polyacrylamide-co-acrylic acid flocculation formulation in order to examine the effect.

**Table 15. Transmittance and Absorbance of Diamond Mining Water Samples Treated with Polyacrylamide-co-Acrylic Acid Flocculation Formulation and Different Concentrations of SLES Surfactant Formulation**

| **Percent SLES Surfactant Formulation (v/v) (%)** | **% Transmittance (at 550 nm)** | **Absorbance (at 280 nm)** |
|---|---|---|
| 0 | 85 | 0.48 |
| 0.01 | 80 | 0.5 |
| 0.02 | 90 | 0.3 |
| 0.05 | 90 | 0.3 |
| 0.2 | 87 | 0.65 |

**Table 16. Analysis of Total Organic Carbon (TOC) of Diamond Mining Water Samples Treated with Polyacrylamide-co-Acrylic Acid Flocculation Formulation and Different Concentrations of SLES Surfactant Formulation**

| **Percent SLES Surfactant Formulation (v/v) (%)** | **Total Organic Carbon (mg/L)** |
|---|---|
| Untreated Effluent Water | 660 |
| 0 | 63 |
| 0.01 | 68 |
| 0.02 | 30 |
| 0.05 | 43 |
| 0.2 | 75 |

**Table 17. Amount of Sludge Collected from Diamond Mining Water Samples Treated with Polyacrylamide-co-Acrylic Acid Flocculation Formulation and Different Concentrations of SLES Surfactant Formulation**

| **Percent SLES Surfactant Formulation (v/v) (%)** | **Sludge (mg/L)** |
|---|---|
| 0 | 19.7 |
| 0.01 | 14.5 |
| 0.02 | 19.6 |
| 0.05 | 16.11 |
| 0.2 | 18.8 |

**Table 18. Total Dissolved Solids in Diamond Mining Water Samples Treated with Polyacrylamide-co-Acrylic Acid Flocculation Formulation and Different Concentrations of SLES Surfactant Formulation**

| **Percent SLES Surfactant Formulation (v/v) (%)** | **Total Dissolved Solid (mg/L)** |
|---|---|
| 0 | 1000 |
| 0.01 | 1000 |
| 0.02 | 2000 |
| 0.2 | 2600 |

### II. SLES Surfactant Formulation at Different Concentrations in Combination with Polyacrylamide-co-Acrylic Acid Flocculation Formulation for Wastewater Treatment of Gold Mining (Low pH) Effluent Water

Wastewater Treatment Procedure:
1. 50 mL of the effluent water was transferred to a 300 mL beaker.
2. The effluent water was set to stir with a magnetic stirrer.
3. 50 mg of Aqua Shock was added to the mixture.
4. 225 µL of polyacrylamide-co-acrylic acid flocculation formulation was added to the mixture.
5. SLES surfactant formulation was added to the mixture.
6. Stirring was ceased to allow the solids to settle to the bottom of the beaker.
7. The water was filtered (through GF/A Glass Microfiber Filters. Whatman- 1.6 µm) with Buchner vacuum flask arrangement and the filtrate was collected.
8. The sludge collected was washed with double distilled water and the washing water was discarded.
9. The sludge was dried in an oven at 60°C.
10. The sludge was weighed after drying

**Table 19. Materials and Amounts Used in Wastewater Treatment of Effluent Water from Gold Mining (Low pH)**

| **Water Sample (mL)** | **Aqua Shock (mg)** | **Flocculant Formulation (µL)** | **SLES Surfactant Formulation (µL)** | **Percent SLES Surfactant Formulation (v/v) (%)** |
|---|---|---|---|---|
| 50 | 50 | 225 | 0 | 0 |
| 50 | 50 | 225 | 5 | 0.01 |
| 50 | 50 | 225 | 10 | 0.02 |
| 50 | 50 | 225 | 25 | 0.05 |
| 50 | 50 | 225 | 100 | 0.2 |

Different concentrations (in the range of 0-0.2 % (v/v)) of SLES surfactant formulation were combined with the polyacrylamide-co-acrylic acid flocculation formulation in order to examine the effect.

**Table 20. Transmittance and Absorbance of Gold Mining (Low pH) Water Samples Treated with Polyacrylamide-co-Acrylic Acid Flocculation Formulation and Different Concentrations of SLES Surfactant Formulation**

| **Percent SLES Surfactant Formulation (v/v) (%)** | **% Transmittance (at 550 nm)** | **Absorbance (at 280 nm), OD** |
|---|---|---|
| 0 | 68 | 0.3 |
| 0.01 | 94 | 0.1 |
| 0.02 | 94 | 0.1 |
| 0.05 | 83.2 | 0.1 |
| 0.2 | 81 | 0.3 |

**Table 21. Amount of Sludge Collected from Gold Mining (Low pH) Water Samples Treated with Polyacrylamide-co-Acrylic Acid Flocculation Formulation and Different Concentrations of SLES Surfactant Formulation**

| **Percent SLES Surfactant Formulation (v/v) (%)** | **Sludge (mg/L)** |
|---|---|
| 0 | 1200 |
| 0.01 | 1200 |
| 0.02 | 1380 |
| 0.05 | 1440 |
| 0.2 | 1133 |

**Table 22. Total Dissolved Solids in Gold Mining (Low pH) Water Samples Treated with Polyacrylamide-co-Acrylic Acid Flocculation Formulation and Different Concentrations of SLES Surfactant Formulation**

| **Percent SLES Surfactant Formulation (v/v) (%)** | **Total Dissolved Solid (mg/L)** |
|---|---|
| 0 | 2200 |
| 0.01 | 2040 |
| 0.02 | 1600 |
| 0.05 | 2140 |
| 0.2 | 2360 |

### III. Results and Discussion

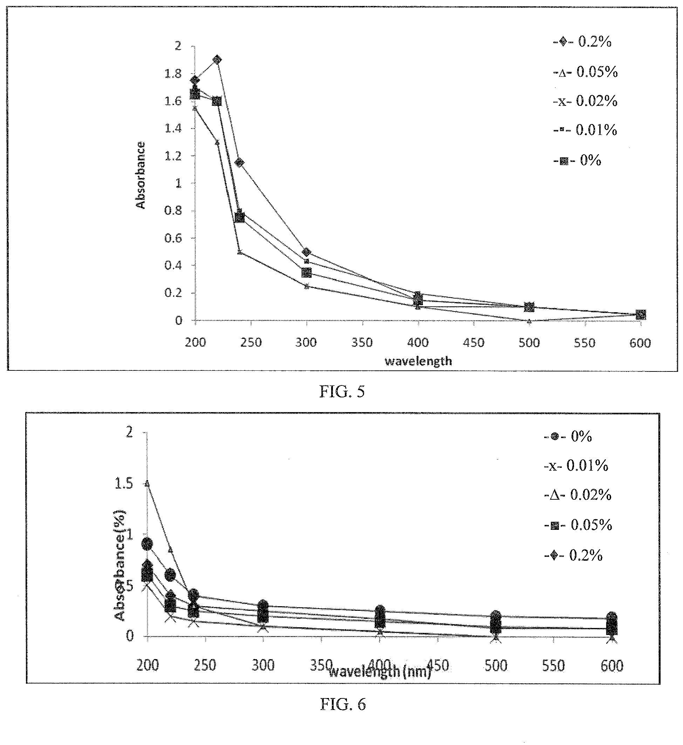

Different dosages of SLES surfactant formulation were examined in combination with the polyacrylamide-co-acrylic acid flocculation formulation to treat different effluent water samples in this Example. Treated water samples were analyzed by UV-Vis to determine percent transmittance (%T) and absorbance as shown in Figures 5 and 6, analyzed for total organic carbon (TOC), total dissolved solids, and the total amount of sludge per volume was determined.

Table 15 above shows %T (at 550 nm) and absorbance (at 280 nm) data obtained in the treated diamond mining water samples treated with different SLES surfactant formulation dosages which indicated that SLES surfactant formulation (%v/v) dosages of 0.02% and 0.05% afforded the highest degree of purification. The absorbance data (Figure 5) was consistent with the transmittance data.

The amount of total organic carbon (TOC) for the diamond mining effluent water samples treated with different SLES surfactant formulation dosages shown in Table 16 above. The lower the organic carbon content determined the more pure the water sample. The amount of total organic carbon (TOC) determined showed that the samples treated with SLES surfactant formulation (%v/v) dosages of 0.02 and 0.05% had the lowest amount of TOC.

The total amount of sludge per volume collected from the diamond mining effluent water samples treated with different SLES surfactant formulation dosages is shown in Table 17 above. The higher the amount of sludge isolated the more effective the water treatment. The data showed that varying the dosage of SLES surfactant formulation produced similar amounts of sludge.

The total solids per volume isolated from the diamond mining effluent water samples treated with the different SLES surfactant formulation dosages is shown in Table 18 above. Total solids represent the sum of dissolved and suspended solids in the sample. The lower the total solid value the more effective the addition of the particular surfactant agent used.

%T (at 550 nm) and absorbance (at 280 nm) data are given at Table 20 for the gold mining (low pH) water samples treated the different SLES surfactant formulation dosages which indicated that SLES surfactant formulation (%v/v) dosages of 0.01% and 0.02% afforded the highest degree of purification. The absorbance data (Figure 6) was consistent with the transmittance data.

Table 21 shows the total amount of sludge per volume collected from gold mining (low pH) water samples treated the different SLES surfactant formulation dosages. Similar amounts of sludge were recovered regardless of the surfactant formulation dosage.

Total dissolved solids per volume determined for gold mining (low pH) water samples treated the different SLES surfactant formulation dosages are shown in Table 22 above. Total solids represent the sum of dissolved and suspended solids in the sample. The lower the total solid value the more effective the addition of the particular surfactant agent used.

### Example 4: Effect of Modified SLES Surfactant Formulations in Combination with Polyacrylamide-co-Acrylic Acid Flocculation Formulation for Wastewater Treatment

### I. Modified SLES Surfactant Formulation Preparation Procedures

SLES Surfactant Formulation Prepared with Double Distilled Water (DDW):
Double distilled water, 90 mL was added into a flask equipped with mechanical stirrer and heated to 90°C. To the stirring solution, 30 g of SLES and 30 g of sodium chloride were added and stirred at 600 rpm for 2 min.

SLES Surfactant Formulation Prepared with Tap Water:
Tap water, 90 mL was used instead of Richards Bay South Africa (RB) sea water according to the procedure described above.

SLES Surfactant Formulation Prepared with Sea Water (Mediterranean):
Sea water (Mediterranean), 90 mL was used according to the procedure described above.

SLES Surfactant Formulation Prepared with (5%, w/v) MgCl₂:
Tap water, 90 mL, 30 g of SLES and 5 g of magnesium chloride were used according to the procedure described above.

SLES Surfactant Formulation Prepared with MgCl₂ and CaCl₂:
Tap water, 90 mL, 30 g of SLES, 5 g of magnesium chloride, and 5g of calcium chloride were used according to the procedure described above.

SLES Surfactant Formulation Prepared with MgCl₂ and NaCl:
Sea water (Mediterranean), 90 mL, 30 g of SLES, 25 g of sodium chloride, and 5 g of magnesium chloride were used according to the procedure described in "A" above.

**Table 23. Modified SLES Formulations: Materials and Amounts Used**

| Modified SLES Surfactant Formulation Sample | SLES (g) | Amount of Water (mL) | NaCl (g) | MgCl₂ (g) | CaCl₂ (g) |
|---|---|---|---|---|---|
| Tap Water | 30 | 90 | 30 | -- | -- |
| Sea Water (Mediterranean) | 30 | 90 | 30 | -- | |
| DDW | 30 | 90 | 30 | -- | -- |
| *MgCl₂+NaCl | 30 | 90 | 25 | 5 | -- |
| *MgCl₂ | 30 | 90 | -- | 5 | -- |
| *MgCl₂+CaCl₂ | 30 | 90 | -- | 5 | 5 |

| | | | | | |
|---|---|---|---|---|---|
| "--" denotes none was added. * Prepared using tap water. | | | | | |

### II. Modified SLES Surfactant Formulations in Combination with Polyacrylamide-co-Acrylic Acid Flocculation Formulation for Wastewater Treatment of Diamond Mining Effluent Water

Wastewater Treatment Procedure:
1. 100 mL of the effluent water was transferred to a 300 mL beaker.
2. The effluent water was set to stir with a magnetic stirrer.
3. 3 mL of polyacrylamide-co-acrylic acid flocculation formulation was added to the mixture.
4. 20 µL of modified SLES surfactant formulation was added to the mixture.
5. Stirring was ceased to allow the solids to settle to the bottom of the beaker.
6. The water was filtered (through GF/A Glass Microfiber Filters. Whatman- 1.6 µm) with Buchner vacuum flask arrangement and the filtrate was collected.
7. The sludge collected was washed with double distilled water and the washing water was discarded.
8. The sludge was dried in an oven at 120°C.
9. The sludge was weighed after drying.

**Table 24. Materials and Amounts Used in Wastewater Treatment of Effluent Water from Diamond Mining**

| **Sample Name** | **Waste Water Volume (mL)** | **Flocculant Formulation (mL)** | **Modified SLES Surfactant Formulation (µL)** |
|---|---|---|---|
| DDW | 100 | 3 | 20 |
| Tap Water | 100 | 3 | 20 |
| Sea Water (Mediterranean) | 100 | 3 | 20 |
| *MgCl₂ | 100 | 3 | 20 |
| *MgCl₂+CaCl₂ | 100 | 3 | 20 |
| *MgCl₂+NaCl | 100 | 3 | 20 |

| | | | |
|---|---|---|---|
| * Prepared using tap water. | | | |

**Table 25. Transmittance and Absorbance of Diamond Mining Water Samples Treated with Polyacrylamide-co-Acrylic Acid Flocculation Formulation and Different Modified SLES Surfactant Formulations**

| **Sample Name** | **% Transmittance (at 550 nm)** | **Absorbance (at 280 nm)** |
|---|---|---|
| DDW | 85 | 0.18 |
| Sea Water (Mediterranean) | 81 | 0.22 |
| Tap Water | 81 | 0.2 |
| *MgCl₂ | 97 | 0.03 |
| *MgCl₂+NaCl | 95 | 0.04 |
| *MgCl₂+CaCl₂ | 85 | 0.03 |

| | | |
|---|---|---|
| * Prepared using tap water. | | |

**Table 26. Electrical Conductivity and Total Dissolved Solids (TDS) of Diamond Mining Water Samples Treated with Polyacrylamide-co-Acrylic Acid Flocculation Formulation and Different Modified SLES Surfactant Formulations**

| **Sample Name** | **Electrical Conductivity (mS/cm)** | **Total Dissolved Solids (mg/L)** |
|---|---|---|
| DDW | 230 | 1500 |
| Sea Water (Mediterranean) | 250 | 1600 |
| Tap Water | 240 | 1540 |
| *MgCl₂ | 300 | 1920 |
| *MgCl₂+NaCl | 220 | 1400 |
| *MgCl₂+CaCl₂ | 290 | 1860 |

| | | |
|---|---|---|
| * Prepared using tap water. | | |

**Table 27. Amount of Sludge Collected from Diamond Mining Water Samples Treated with Polyacrylamide-co-Acrylic Acid Flocculation Formulation and Different Modified SLES Surfactant Formulations**

| **Sample Name** | **Sludge (mg/L)** |
|---|---|
| DDW | 1626 |
| Sea Water (Mediterranean) | 1517 |
| Tap Water | 1761 |
| *MgCl₂ | 1623 |
| *MgCl₂+NaCl | 1883 |

| | |
|---|---|
| * Prepared using tap water. | |

**Table 28. Analysis of Total Organic Carbon (TOC) of Diamond Mining Water Samples Treated with Polyacrylamide-co-Acrylic Acid Flocculation Formulation and Different Modified SLES Surfactant Formulations**

| **Sample Name** | **Total Organic Carbon (mg/L)** |
|---|---|
| DDW | 32 |
| Sea Water (Mediterranean) | 97 |
| Tap Water | 21 |
| *MgCl₂ | 32 |
| *MgCl₂+NaCl | 65 |
| *MgCl₂+CaCl₂ | 17 |

| | |
|---|---|
| * Prepared using tap water. | |

### III. Results and Discussion

Modified SLES surfactant formulations were prepared using different sources of water (tap water, sea water, and DDW). Additional modified SLES surfactant formulations were prepared additionally containing different salts (MgCl₂, CaCl₂, NaCl). These formulations were examined in combination with the polyacrylamide-co-acrylic acid flocculation formulation to treat diamond mining effluent water as shown in this Example. Treated diamond mining water samples were analyzed by UV-Vis to determine percent transmittance (%T) as shown in Figure 8, and absorbance, analyzed for electrical conductivity, total dissolved solids, the total amount of sludge per volume, and total organic carbon content.

Percent transmittance (%T) and absorbance data for diamond mining water samples treated with the modified SLES surfactant formulations is shown in Table 25 above. Percent transmittance (%T) data is shown in Figure 7. The highest %T values were obtained for the formulations prepared in tap water and containing MgCl₂ and MgCl₂+NaCl. UV-vis absorbance data was consistent with the transmittance data except that the modified SLES formulation containing MgCl₂+CaCl₂ was also found to produce low absorption (at 280 nm), indicative of good purification ability (Table 25).

Total dissolved solids per volume and electrical conductivity are listed in Table 26 above.

Table 27 shows the total amount of sludge per volume collected from diamond mining water samples treated the modified SLES surfactant formulations. Similar amounts of sludge were recovered using the different modified SLES surfactant formulations.

The amount of total organic carbon (TOC) for the diamond mining effluent water samples treated is shown in Table 28 above. The use of the modified SLES surfactant formulations in the treated samples produced similar amounts of organic carbon.

### Example 5: VI. Optimization of MgCl₂ Content in the Preparation of Modified SLES Surfactant Formulations

### I. Modified SLES Surfactant Formulations Containing 1 to 15% (w/v) Magnesium Chloride Preparation Procedure

Tap water, 90 mL, was added to a flask equipped with mechanical stirrer.

30 g of SLES was added.

Magnesium chloride was added and stirred at room temperature at 600 rpm for approximately 10 minutes to obtain a homogeneous milky dispersion (the mixing time required may be longer, depending on the MgCl₂ content).

Heating may be optionally applied to enhance solubilization.

**Table 29. Modified SLES Surfactant Formulations Containing Approximately 1- 15% (w/v) MgCl₂**

| **MgCl₂ % (w/v)** | **SLES (g)** | **Tap Water (mL)** | **MgCl₂ (g)** |
|---|---|---|---|
| 0 | 30 | 90 | 0 |
| 1.1 | 30 | 90 | 1 |
| 3.3 | 30 | 90 | 3 |
| 5.5 | 30 | 90 | 5 |
| 10.1 | 30 | 90 | 10 |
| 16.6 | 30 | 90 | 15 |

| | | | |
|---|---|---|---|
| - All samples prepared at room temperature. | | | |

### II. Preparation of Modified Polyacrylamide-co-Acrylic Acid Flocculation Formulation using SLES Surfactant Formulation Containing 1 - 15% (w/v) MgCl₂ Preparation Procedure

600 µL of modified SLES surfactant formulation containing MgCl₂ as prepared above was dissolved in 100 mL of DDW.

Subsequently, 0.33 g of polyacrylamide-co-acrylic acid copolymer was added and the mixture was stirred until absolute homogenization was attained.

These formulations were designated as Flocculation Formulation-Mg.

### III. Flocculation Formulation-Mg Containing 1 to 15% (w/v) MgCl₂ used for Wastewater Treatment of Diamond Mining Effluent Water

Wastewater Treatment Procedure:
1. 100 mL of the effluent water was transferred to a 300 mL beaker.
2. The effluent water was set to stir with a magnetic stirrer.
3. 3 mL of flocculation formulation-Mg was added to the mixture.
4. The mixture was stirred for 10 min.
5. Stirring was ceased to allow the solids to settle to the bottom of the beaker.
6. The water was filtered (through GF/A Glass Microfiber Filters. Whatman- 1.6 µm) with Buchner vacuum flask arrangement and the filtrate was collected.
7. The sludge collected was washed with double distilled water and the washing water was discarded.
8. The sludge was dried in an oven at 120°C.
9. The sludge was weighed after drying.

**Table 30. Materials and Amounts Used in Wastewater Treatment of Effluent Water from Diamond Mining**

| **MgCl₂ % (w/v)** | **Waste Water Volume (mL)** | **Flocculation Formulation-Mg (mL)** |
|---|---|---|
| 0 | 100 | 3 |
| 1.1 | 100 | 3 |
| 3.3 | 100 | 3 |
| 5.5 | 100 | 3 |
| 10.1 | 100 | 3 |
| 16.6 | 100 | 3 |

**Table 31. Amount of Sludge Collected from Diamond Mining Water Samples Treated with Flocculation Formulation-Mg**

| **MgCl₂ % (w/v)** | **Sludge (mg/L)** |
|---|---|
| 0 | 15470 |
| 1.1 | 15985 |
| 3.3 | 15259 |
| 5.5 | 15992.8 |
| 10.1 | 16532.6 |
| 16.6 | 18380 |

**Table 32. Amount of Total Solids Collected from Diamond Mining Water Samples Treated with Flocculation Formulation-Mg**

| **MgCl₂ % (w/v)** | **Total Solids (mg/L)** |
|---|---|
| 0 | 1993 |
| 1.1 | 1705 |
| 3.3 | 1760 |
| 5.5 | 2109 |
| 10.1 | 1552.5 |
| 16.6 | 1268 |

### IV. Flocculation Formulation-Mg Containing 1 to 15% (w/v) MgCl₂ used for Wastewater Treatment of Gold Mining (Low pH) Effluent Water

Wastewater Treatment Procedure:
1. 100 mL of the effluent water was transferred to a 300 mL beaker.
2. The effluent water was set to stir with a magnetic stirrer.
3. 100 mg of Aqua Shock was added to the mixture.
4. 3 mL of modified Flocculation Formulation-Mg was added to the mixture.
5. The mixture was stirred for 3 min.
6. Stirring was ceased to allow the solids to settle to the bottom of the beaker.
7. The water was filtered (through GF/A Glass Microfiber Filters. Whatman- 1.6 µm) with Buchner vacuum flask arrangement and the filtrate was collected.
8. The sludge collected was washed with double distilled water and the washing water was discarded.
9. The sludge was dried in an oven at 120°C.
10. The sludge was weighed after drying.

**Table 33. Materials and Amounts Used in Wastewater Treatment of Effluent Water from Gold Mining (Low pH)**

| **MgCl₂ % (w/v)** | **Waste Water Volume (mL)** | **Aqua Shock (mg)** | **Flocculation Formulation-Mg (mL)** |
|---|---|---|---|
| 0 | 100 | 100 | 3 |
| 1.1 | 100 | 100 | 3 |
| 3.3 | 100 | 100 | 3 |
| 5.5 | 100 | 100 | 3 |
| 10.1 | 100 | 100 | 3 |
| 16.6 | 100 | 100 | 3 |

**Table 34. Amount of Sludge Collected from Gold Mining (Low pH) Water Samples Treated with Flocculation Formulation-Mg**

| **MgCl₂ % (w/v)** | **Sludge (mg/L)** |
|---|---|
| 0 | 1115.6 |
| 1.1 | 1092 |
| 3.3 | 979 |
| 5.5 | 1265.6 |
| 10.1 | 1123 |
| 16.6 | 1266.2 |

**Table 35. Amount of Total Solids Collected from Gold Mining (Low pH) Water Samples Treated with Flocculation Formulation-Mg**

| **MgCl₂ % (w/v)** | **Total Solids (mg/L)** |
|---|---|
| 0 | 5156 |
| 1.1 | 5403 |
| 3.3 | 4927 |
| 5.5 | 4212 |
| 10.1 | 5200 |
| 16.6 | 5306 |

### V. Results and Discussion

Modified polyacrylamide-co-acrylic acid flocculation formulations were prepared with SLES surfactant formulations containing 1 - 15% (w/v) MgCl₂. These formulations were examined in the treatment of different effluent waters as shown in this Example. Treated water samples were analyzed by UV-Vis to determine percent transmittance (%T) and absorbance as shown in Figures 13 and 14, analyzed for the total amount of sludge per volume, and for total dissolved solids per volume.

Percent transmittance (%T) data (Figure 5) and absorbance for diamond mining water samples treated with the modified Flocculation Formulation-Mg did not show any clear effect from the addition of MgCl₂.

Table 31 shows the total amount of sludge per volume collected from diamond mining water samples treated the different modified Flocculation Formulation-Mg formulations. The results indicated that the mining water samples treated with increasing amounts of MgCl₂ generated the highest amounts of sludge.

Total dissolved solids per volume are shown in Table 32 above. The results showed that the higher the content of MgCl2 in the formulation the lower the amount of solids left.

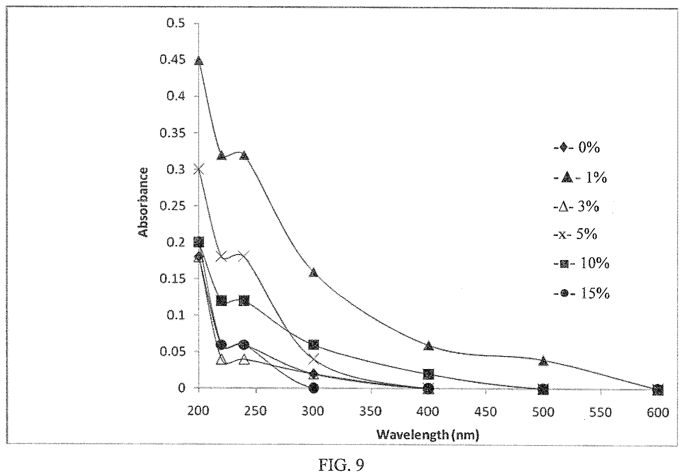

Percent transmittance (%T) data (Figures 9) and absorbance for gold mining (low pH) water samples treated with the modified Flocculation Formulation-Mg did not show any clear effect from the addition of MgCl₂.

Table 34 shows the total amount of sludge per volume collected from gold mining (low pH) water samples treated with the different modified Flocculation Formulation-Mg formulations. The results indicated that the mining water samples treated with increasing amounts of MgCl₂ generated the highest amounts of sludge.

Total solids per volume determined for gold mining (low pH) water samples treated the modified Flocculation Formulation-Mg are shown in Table 35 above. The lowest total solids amount was obtained in the modified formulation containing 5.5% MgCl₂.

## Claims

1. A method for treatment of wastewater comprising the steps of:
bringing into contact an aqueous flocculant formulation comprising an organic polymeric flocculant, which is a copolymer of an acrylamide and an acrylic acid, wherein the percentage of acrylamide to acrylic acid in the copolymer varies from 10% to 90%, and the degree of polymerization in the copolymer is in the range of from 100 to 10000; an aqueous surfactant formulation comprising a surfactant, and wastewater, wherein the organic polymeric flocculant is present in the wastewater at a concentration from 0.0001% to 1% w/w, and the surfactant is present in the wastewater at a concentration from 0.0001% to 0.1% w/w; wherein the aqueous surfactant formulation comprises an alkaline earth metal salt; and
separating flocculated contaminants from the wastewater; and
wherein the wastewater originates from an industrial source selected from the group consisting of diamond industry, gold industry, iron industry, steel industry, food and beverage industry, textiles industry, pharmaceuticals industry, chemical industry, agriculture industry, pulp and paper industry, nuclear industry, and electronics industry.

2. The method of claim 1, wherein the flocculant is an ionic copolymer of acrylamide and acrylic acid.

3. The method of any one of claims 1-2, wherein the surfactant is a cationic, anionic, amphoteric or non-ionic surfactant.

4. The method of claim 3, wherein the surfactant is cationic poly(diallyldimethylammonium chloride), anionic sodium lauryl ether sulfate, amphoteric cocamidopropyl hydroxysultaine, or non-ionic polyoxyethylenesorbitan monooleate, or sorbitan monolaurate.

5. The method of any one of claims 1-4, wherein the surfactant is added to a concentration of between 0.02 to 0.05 % v/v wastewater.

6. The method of any one of claims 1-4, wherein the alkaline earth metal salt is MgCl₂ or CaCl₂.

7. The method of claim 6, wherein the alkaline earth metal salt is MgCl₂ and is present at about 5 % w/w in the aqueous surfactant formulation.

8. The method of any one of claims 1-7, wherein the aqueous flocculant formulation comprises an alkali salt.

9. The method of claim 8, wherein the alkali salt is selected from the group consisting of sodium chloride and sodium hydroxide.

10. The method of any one of claims 1-9, wherein the aqueous surfactant formulation further comprises an oxidant such as hydrogen peroxide.

11. The method of any one of claims 1-10, wherein the aqueous flocculant formulation further comprises an alkaline earth salt such as magnesium chloride or calcium chloride.

## Patentansprüche

1. Verfahren zum Behandleln von Abwasser, umfassend die Schritte:
Inkontaktbringen einer wässrigen Flockungsmittelformulierung, umfassend ein organisches polymeres Flockungsmittel, das ein Copolymer aus einem Acrylamid und einer Acrylsäure ist, wobei der Prozentsatz von Acrylamid zu Acrylsäure in dem Copolymer von 10 % bis 90 % variiert und wobei der Polymerisationsgrad in dem Copolymer im Bereich von 100 bis 10.000 liegt; einer wässrigen Tensidformulierung, umfassend ein Tensid, und Abwasser, wobei das organische polymere Flockungsmittel in dem Abwasser in einer Konzentration von 0,0001 Gew.-% bis 1 Gew.-% vorhanden ist und wobei das Tensid in dem Abwasser in einer Konzentration von 0,0001 Gew.-% bis 0,1 Gew.-% vorhanden ist; wobei die wässrige Tensidformulierung ein Erdalkalimetallsalz umfasst; und
Abscheiden ausgeflockter Verunreinigungen aus dem Abwasser; und
wobei das Abwasser aus einer industriellen Quelle stammt, ausgewählt aus der Gruppe, bestehend aus Diamantenindustrie, Goldindustrie, Eisenindustrie, Stahlindustrie, Lebensmittel-und Getränkeindustrie, Textilindustrie, Pharmaindustrie, chemischer Industrie, Agrarindustrie, Zellstoff- und Papierindustrie, Atomindustrie und Elektronikindustrie.

2. Verfahren nach Anspruch 1, wobei das Flockungsmittel ein ionisches Copolymer von Acrylamid und Acrylsäure ist.

3. Verfahren nach einem der Ansprüche 1 bis 2, wobei das Tensid ein kationisches, anionisches, amphoteres oder nichtionisches Tensid ist.

4. Verfahren nach Anspruch 3, wobei das Tensid kationisches Poly(diallyldimethylammoniumchlorid), anionisches Natriumlaurylethersulfat, amphoteres Cocamidopropylhydroxysultain oder nicht-ionisches Polyoxyethylensorbitanmonooleat oder Sorbitanmonolaurat ist.

5. Verfahren nach einem der Ansprüche 1 bis 4, wobei das Tensid in einer Konzentration zwischen 0,02 und 0,05 Vol.-% Abwasser zugegeben wird.

6. Verfahren nach einem der Ansprüche 1 bis 4, wobei das Erdalkalimetallsalz MgCl₂ oder CaCl₂ ist.

7. Verfahren nach Anspruch 6, wobei das Erdalkalimetallsalz MgCl₂ ist und zu etwa 5 Gew.-% in der wässrigen Tensidformulierung vorhanden ist.

8. Verfahren nach einem der Ansprüche 1 bis 7, wobei die wässrige Flockungsmittelformulierung ein Alkalisalz umfasst.

9. Verfahren nach Anspruch 8, wobei das Alkalisalz aus der Gruppe ausgewählt ist, bestehend aus Natriumchlorid und Natriumhydroxid.

10. Verfahren nach einem der Ansprüche 1 bis 9, wobei die wässrige Tensidformulierung ferner ein Oxidationsmittel wie Wasserstoffperoxid umfasst.

11. Verfahren nach einem der Ansprüche 1 bis 10, wobei die wässrige Flockungsmittelformulierung ferner ein Erdalkalisalz wie Magnesiumchlorid oder Calciumchlorid umfasst.

## Revendications

1. Procédé de traitement des eaux usées comprenant les étapes :
de mise en contact d'une formulation aqueuse de floculant comprenant un floculant polymère organique, qui est un copolymère d'un acrylamide et d'un acide acrylique, dans lequel le pourcentage d'acrylamide par rapport à l'acide acrylique dans le copolymère varie de 10 à 90 %, et le degré de polymérisation dans le copolymère est compris entre 100 et 10 000 ;
une formulation aqueuse de tensioactif comprenant un tensioactif et des eaux usées, dans lequel le floculant polymère organique est présent dans les eaux usées à une concentration de 0,0001 à 1 % p/p, et le tensioactif est présent dans les eaux usées à une concentration de 0,0001 à 0,1 % p/p ;
dans lequel la formulation aqueuse de tensioactif comprend un sel de métal alcalino-terreux ; et
la séparation des contaminants floculés des eaux usées ; et
dans lequel les eaux usées proviennent d'une source industrielle choisie dans le groupe constituée par l'industrie du diamant, l'industrie de l'or, l'industrie du fer, l'industrie sidérurgique, l'industrie alimentaire et des boissons, l'industrie textile, l'industrie pharmaceutique, l'industrie chimique, l'industrie agricole, l'industrie des pâtes et papiers, l'industrie nucléaire et l'industrie électronique.

2. Procédé selon la revendication 1, dans lequel le floculant est un copolymère ionique d'acrylamide et d'acide acrylique.

3. Procédé selon l'une quelconque des revendications 1 à 2, dans lequel le tensioactif est un tensioactif cationique, anionique, amphotère ou non ionique.

4. Procédé selon la revendication 3, dans lequel le tensioactif est le poly(chlorure de diallyldiméthylammonium) cationique, le lauryl éther sulfate de sodium anionique, le cocamidopropyl hydroxysultaine amphotère, ou le monooléate polyoxyéthylènesorbitan non ionique, ou le monolaurate de sorbitan.

5. Procédé selon l'une quelconque des revendications 1 à 4, dans lequel le tensioactif est ajouté à une concentration comprise entre 0,02 et 0,05 % v/v d'eaux usées.

6. Procédé selon l'une quelconque des revendications 1 à 4, dans lequel le sel de métal alcalino-terreux est MgCl₂ ou CaCl₂.

7. Procédé selon la revendication 6, dans lequel le sel de métal alcalino-terreux est MgCl₂ et est présent à environ 5 % p/p dans la formulation de tensioactif aqueux.

8. Procédé selon l'une quelconque des revendications 1 à 7, dans lequel la formulation aqueuse de floculant comprend un sel alcalin.

9. Procédé selon la revendication 8, dans lequel le sel alcalin est choisi dans le groupe constitué par le chlorure de sodium et l'hydroxyde de sodium.

10. Procédé selon l'une quelconque des revendications 1 à 9, dans lequel la formulation aqueuse de tensioactif comprend en outre un oxydant tel que le peroxyde d'hydrogène.

11. Procédé selon l'une quelconque des revendications 1 à 10, dans lequel la formulation aqueuse de floculant comprend en outre un sel alcalino-terreux tel que le chlorure de magnésium ou le chlorure de calcium.
